# EUROPÄISCHE PATENTSCHRIFT

(11) **EP 1 509 004 B1**
(45) Veröffentlichungstag und Bekanntmachung des Hinweises auf die Patenterteilung: **28.02.2007**
(21) Anmeldenummer: 04103899.3
(22) Anmeldetag: 12.08.2004
(51) Int. Cl.: H04L 12/28, H04L 12/64, H04L 29/06, H04L 12/46

(54) **Verfahren zum Betrieb zweier Teilnetze mit Buscharakter sowie Netzwerk**
Method of operating two bus-like subnets and corresponding network
Procédé d'operation de deux sous-réseaux ayant des caracteristiques d'un bus et réseau correspondant

(30) Priorität: 21.08.2003 DE 10338454
(43) Veröffentlichungstag der Anmeldung: 23.02.2005
(73) Patentinhaber: ROBERT BOSCH GMBH, 70442 Stuttgart (DE)
(72) Erfinder: Zender, Arne, 31162 Heinde (DE); Vollmer, Vasco, 31188 Holle (DE)

(56) Entgegenhaltungen:
- EP-A- 1 134 937
- EP-A- 1 202 497
- WO-A-00/57263
- US-B1- 6 212 633

## Beschreibung

### Stand der Technik

Die Erfindung geht aus von einem Verfahren zum Betrieb zweier Teilnetze mit Busstruktur.

Aus dem IEEE 1394 Standard ist ein serielles Bussystem bekannt, bei dem verschiedene Endgeräte (Knoten) entweder über ein vier- bis sechsadriges Kabel oder einen Lichtwellenleiter angeschlossen werden. Dabei kann ein Knoten wahlweise als Endstück (Blatt) oder als Relaisknoten (Zweig) ausgeführt sein. Der oberste Knoten wird als Wurzel bezeichnet. Durch den Einsatz der verschiedenen Knotentypen kann eine geeignete Topologie des Netzes aufgebaut werden. Ein Blatt empfängt dabei Informationspakete und verarbeitet sie, falls die Zieladresse des Paketes mit der eigenen übereinstimmt. Ein Zweig muss zusätzliche alle Pakete, die er auf einem Port empfängt, auf allen Ports aussenden.

IEEE 1394 sieht vor, dass das Netzwerk selbstkonfigurierend ist, d.h. nach dem Einschalten oder nach einem Reset senden alle Knoten einige ausgewählte Informationen über sich selbst ins Netz. Diese Informationen werden dabei von allen Knoten empfangen. Ein Knoten kann dabei in der Art ausgeführt, dass er zusätzliche Verwaltungsfunktionen für das Netzwerk übernehmen kann (Busmanagement). Dazu sammelt er alle Informationen der anderen Knoten, verarbeitet sie uns speichert sie intern geeignet ab. Sollten mehrere Knoten Busmanagementfähigkeiten besitzen, gibt es ein Konkurrenzverfahren, aus dem ein Knoten als Sieger hervorgeht und dann das Busmanagement übernimmt. Der Busmanagementknoten entscheidet dabei über Stromversorgung, Aktivität und Busbelegung einzelner Knoten. Außerdem stellt er Informationen zur Netztopologie und Geschwindigkeit zur Verfügung.

Die EP-A-1134937 offenbart, dass bei einem Teilnetz aus wenigstens zwei Bussen im Falle des Anschlusses eines neuen Geräts ein Reset nur im betroffenen Bus ausgelöst wird. Während des Resets wird der Datenverkehr auf dem betroffenen Bus unterbrochen.

### Vorteile der Erfindung

Das erfindungsgemäße Verfahren erhöht die integrale Sicherheit und Stabilität eines Netzwerkes/einer Netzstruktur, insbesondere nach dem IEEE 1394 Standard, welche /s aus mehreren Teilnetzen besteht. Das erfindungsgemäße Verfahren ermöglicht es dem Administrator eines Netzwerkes/einer Netzstruktur nach dem IEEE 1394 Standard bestimmte Geräte vom Betrieb auszuschließen und damit die Störung des Netzwerkbetriebs durch inkompatible oder nicht zertifizierte Geräte zu unterbinden.

Die Erfindung wird durch den Gegenstand der unabhängigen Ansprüche definiert.

In den Unteransprüchen sind Ausgestaltungen des Verfahrens aufgezeigt bzw. eine Netzstruktur zum Durchführen des erfindungsgemäßen Verfahrens.

### Zeichnungen

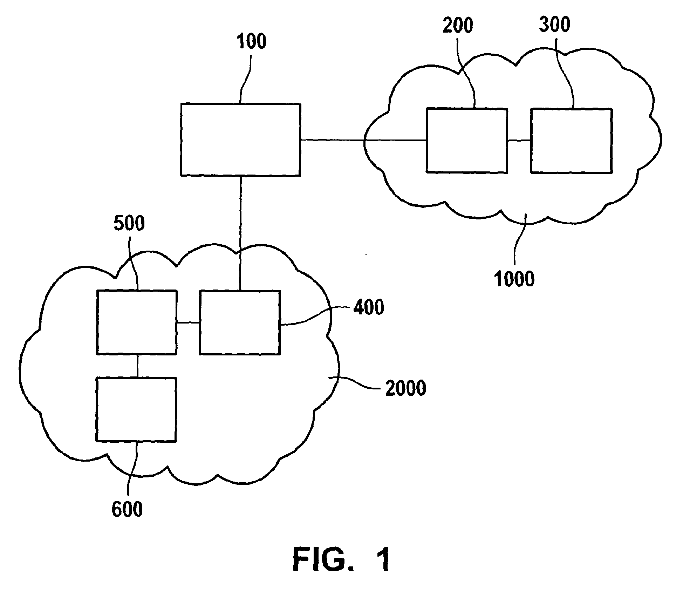

Anhand der Zeichnungen werden Ausführungsbeispiele der Erfindung erläutert. Figur 1 zeigt eine Netzwerktopologie mit der das Verfahren nach der Erfindung ausführbar ist.

### Beschreibung von Ausführungsbeispielen

Das erfindungsgemäße Verfahren geht aus von einem Netzwerk nach dem IEEE 1394 Standard bei dem über einen ausgewählten Port weitere Geräte vom Anwender angesteckt werden können. Die erfindungsgemäße Vorrichtung stellt dabei vorteilhaft eine Erweiterung innerhalb des Gerätes dar, das diesen ausgewählten Port bereitstellt. In der Folge wird diese Erweiterung als Firewall bezeichnet, der an den ausgewählten Port angeschlossenen Teil des Netzwerkes als externes Teilnetz und der übrige Teil als internes Teilnetz.

Die Firewall kann dabei vom Administrator des Netzwerkes in einer Art und Weise konfiguriert werden, die eine Auswahl bestimmter Geräte zulässt, mit dem Ziel die Verbindung dieser Geräte mit dem Netzwerk entweder zu erlauben oder zu verhindern.

Dabei wird die aus dem IEEE 1394 Standard bekannte Bus-Reset-Prozedur verwendet, die nach dem Anstecken bzw. der Inbetriebnahme eines Gerätes an ein herkömmliches IEEE 1394 Netzwerk ausgeführt wird. Das erfindungsgemäße Verfahren in der Firewall verhindert jetzt jedoch, dass dieser Busreset über das gesamte Netzwerk - also sowohl das interne, als auch das externe Teilnetz - ausgeführt wird. Statt dessen wird der Busreset nur für das externe Teilnetz durchgeführt. Dadurch entsteht in dem externen Teilnetz zunächst ein eigenständiges IEEE 1394 Netzwerk. Nach dem Beenden der Bus-Reset-Prozedur überprüft das Firewall-Gerät die übrigen angeschlossene Geräte nach bestimmten Kriterien.

Diese Kriterien können unter anderem sein:
- Herstellerkennung (OUI),
- Herstellerspezifische Kennzeichnung,
- Gerätetyp,
- Geräteklasse,
- Hardwarestand des Gerätes,
- Softwarestand des Gerätes,
- Erfolg der Authentifizierung des Gerätes bei dem Gerät, das die Firewall-Funktionalität aufweist,
- Zuvor erfolgter Konfigurationseintrag in der Firewall (oder in einem anderen geeigneten Datenspeicher), der das bestimmte Gerät zulässt oder ausschließt,
- Funktionsumfang des Gerätes,
- Aktueller Zustand des internen Teilnetzes,
- Vorkonfiguriertes Gesamtsystemverhalten bei bestimmten Umgebungsbedingungen (z.B. Zündungsstatus).

Auf der Basis dieser Überprüfung der Geräte des externen Teilnetzes entscheidet die Firewall, ob ein Zusammenschalten der beiden Teilnetze vorgenommen wird. Wenn die Entscheidung der Firewall für eine Zusammenschaltung ausfällt, initiiert die Firewall einen erneuten Busreset. Dieser wird dabei auf beiden Teilnetzen ausgeführt. In der Folge dieses Busresets blockiert die Firewall den Busreset jedoch nicht und ermöglicht dadurch den Aufbau eines gemeinsamen Netzes, bestehend aus den Geräten des internen und des externen Teilnetzes.

Sollte die Überprüfung negativ ausfallen, behält die Firewall den erreichten Status bei und lässt zwei getrennte Netze unabhängig voneinander operieren. Dadurch wird eine hohe Sicherheit insbesondere für das interne Teilnetz erreicht. Ein Zugriff auf die Geräte und Daten des internen Teilnetzes ist von einem Gerät am externen Teilnetz aus nicht möglich.

Ausführungsbeispiele werden nachfolgend anhand der Figur 1 erläutert.

Gegeben ist ein Netzwerk nach Figur 1. Dabei bilden die Geräte 200 und 300 ein externes Teilnetz 1000, die Geräte 400, 500 und 600 ein internes Teilnetz 2000 und die Firewall 100 die mögliche Verbindung zwischen den Teilnetzen.

### Beispiel 1:

Zunächst besteht eine Verbindung zwischen dem internen Teilnetz 2000 und dem Gerät des externen Teilnetzes. Diese Verbindung wurde nach zuvor geprüfter Berechtigung des Gerätes 200 von der Firewall 100 hergestellt.

Jetzt wird ein zusätzliches Gerät 300 an das externe Teilnetz 1000 angeschlossen. Gemäß dem IEEE 1394 Standard wird dabei vom Gerät 200 oder 300 ein Busreset im gesamten Netzwerk ausgelöst. Die Firewall leitet die Initiierung des Busresets auch in das interne Teilnetz weiter, blockiert jedoch in der Folge die gemeinsame Bearbeitung des Busresets in beiden Teilnetzen. Dadurch entsehen zwei getrennte Netze nach dem IEEE 1394. Die Firewall überprüft daraufhin die Geräte 200 und 300 des Teilnetzes 1000 nach den Kriterien Hersteller und Gerätetyp. Beide Geräte erfüllen die zuvor eingestellten Beschränkungen der Firewall. Daher initiiert die Firewall auf beiden Teilnetzen 1000 und 2000 einen Busreset, der zu einer neuen Konfiguration führt, die alle Geräte 100 bis 600 in einem Netz zusammenfasst. Nach der Konfigurationsphase prüft die Firewall, ob die sich ergebende Netztopologie mit der erwarteten übereinstimmt. Dies ist hier der Fall.

Daher wird die bestehende Netzwerkkonfiguration in den Regelbetrieb übergehen und eine Kommunikation zwischen allen Netzwerkgeräten ist möglich.

### Beispiel 2:

Zunächst besteht entsprechend Beispiel 1 eine Verbindung des Teilnetzes 2000 mit dem Gerät 200 über die Firewall 100. Entsprechend wird ein neues Gerät 300 an das externe Teilnetz angesteckt. In diesem Fall ergibt die Überprüfung durch die Firewall, dass das Gerät 300 keine Berechtigung hat, mit dem internen Teilnetz 2000 zusammengeschaltet zu werden. Daher weist die Firewall das berechtigte Gerät 200 an, den Port in Richtung zum Gerät 300 zu deaktivieren. Der IEEE 1394 Standard stellt dazu entsprechende Verfahren (Hard-disabled) zur Verfügung. In diesem Zustand kann das Gerät 300 keine Kommunikation mit dem Gerät 200 durchführen. Anschließend initiiert die Firewall einen weiteren Busreset, in Folge dessen das Gerät 200 wieder mit dem Teilnetz 2000 verbunden wird.

### Beispiel 3:

Zunächst besteht ausschließlich das interne Teilnetz 2000. Jetzt wird zunächst das Gerät 200 an die externe Seite der Firewall angeschlossen und die Firewall führt die Überprüfung des Netzes nach dem beschriebenen Verfahren durch. Das Gerät 200 erhält die Berechtigung und die Firewall initiiert den entsprechenden Busreset um das Gesamtnetzwerk zu erstellen. In diesem Moment wird das Gerät 300 angesteckt und meldet sich gemäß dem IEEE 1394 Standard beim Gesamtnetz an, da die Firewall nur den von ihr initiierten und gewünschten Busreset diktiert. Dadurch entsteht ein Gesamtnetz aller Geräte 100 bis 600, ohne dass eine Überprüfung des Gerätes 300 durchgeführt wurde. Nach erfolgter Konfiguration des Netzes überprüft die Firewall jedoch die aktuelle Topologie des Netzes (Geräte 100 bis 600) mit der erwarteten (Geräte 100, 200 und 400 bis 600) und stellt eine Abweichung fest. Daraufhin initiiert die Firewall erneut einen Busreset und führt erneut eine Überprüfung der angeschlossenen Geräte durch. Dieser gibt auch für Gerät 300 eine Zutrittsberechtigung und nach dem abschließenden Busreset konfiguriert sich das Netzwerk zu einem Gesamtnetz aller Geräte 100 bis 600.

Nachfolgend werden noch einige Alternativen erläutert.

Besonders vorteilhaft ist es, wenn die Firewall nach dem Busreset zum Zusammenschalten der beiden Teilnetze überprüft, ob sich die Topologie, d.h. die Anzahl und der Typ der angeschlossenen Geräte, insbesondere des externen Teilnetzes gegenüber dem zuvor überprüften geändert hat. Sollte dies der Fall sein, ist es vorteilhaft, sofort einen erneuten Busreset zu initiieren und die Überprüfung zu wiederholen. Dabei ist es vorteilhaft, einen Zähler einzuführen, der es ermöglicht, nach einer bestimmten Anzahl Überprüfungen in einem kurzen Zeitabstand das externe Teilnetz zu trennen und damit einen Zustand hoher Sicherheit einzunehmen.

Alternativ kann nach positiver Überprüfung des externen Teilnetzes die Firewall als sogenannte Bridge arbeiten, bei der zwei Netze nach dem IEEE 1394 miteinander verbunden werden und dadurch eine Kommunikation zwischen den Geräten der beiden Netze möglich ist.

Vorteilhaft ist es, wenn die Firewall in Abhängigkeit von der Topologie des externen Netzes prüft, ob einige Geräte des externen Teilnetzes mit dem internen Teilnetz zusammengeschaltet werden können. D.h. ob das Gerät, welches keine Berechtigung für den Zugriff auf das interne Teilnetz von der Firewall aus gesehen nach einem oder mehreren Geräten mit Berechtigung angeschlossen ist. In diesem Fall kann die Firewall das in der Topologie am weitesten entfernte Gerät mit Berechtigung anweisen, denjenigen Port, der dieses Gerät mit dem Gerät ohne Berechtigung verbindet, abzuschalten (in den Hard-disabled-Mode zu versetzen). Dadurch wird eine teilweise Zusammenschaltung der beiden Teilnetze erreicht und dennoch die Sicherheit für das interne Teilnetz gewährleistet, da das unberechtigte Gerät keine Kommunikationsmöglichkeit mit dem internen Teilnetz erhält.

## Patentansprüche

1. Verfahren zum Betrieb zweier Teilnetze mit Buscharakter mit folgenden Schritten:
- bei einer Inbetriebnahme mindestens eines weiteren Gerätes (300) in einem der Teilnetze (1000, 2000) wird ein Busreset ausgelöst,
- dieser Busreset wird in jenem Teilnetz (1000) wirksam geschaltet, in dem sich das weitere Gerät (200, 300) befindet,
- es werden daraufhin die angeschlossenen Geräte (200 bis 600) von einer Firewall (100) nach bestimmten Kriterien geprüft,
- auf der Basis dieser Überprüfung entscheidet die Firewall (100), ob ein Zusammenschalten der beiden Teilnetze (1000, 2000) vorgenommen wird,
- wenn diese Entscheidung für eine Zusammenschaltung ausfällt, wird ein erneuter Busreset ausgelöst, der nicht vom Firewall (100) blockiert wird, wodurch ein Aufbau eines gemeinsamen Netzes bestehend aus den beiden Teilnetzen (1000, 2000) ermöglicht wird.

2. Verfahren nach Anspruch 1, **dadurch gekennzeichnet, dass** die Teilnetze (1000, 2000) wie auch ein aus diesen zusammengeschaltetes Gesamtnetzwerk nach dem IEEE 1394 Standard betrieben werden.

3. Verfahren nach einem der Ansprüche 1 bis 2, **dadurch gekennzeichnet, dass** bei einer Entscheidung, dass ein Zusammenschalten der Teilnetze (1000, 2000) nicht vorgenommen werden soll, beide Teilnetze unabhängig voneinander betrieben werden, wobei insbesondere ein Zugriff auf die Geräte und Daten jenes Teilnetzes (100) unterbunden wird, das dem zusätzlichen Gerät (200, 300) zugeordnet ist.

4. Verfahren nach einem der Ansprüche 1 bis 3, **dadurch gekennzeichnet, dass** bei der Überprüfung, ob das Teilnetz (1000), in welchem der Busreset durchgeführt wurde, mit dem Teilnetz (2000), das keinen Busreset erfahren hat, zusammengeschaltet werden soll, mindestens eines der nachfolgenden Kriterien geprüft wird:
- Herstellerkennung (OUI),
- Herstellerspezifische Kennzeichnung,
- Gerätetyp,
- Geräteklasse,
- Hardwarestand des Gerätes,
- Softwarestand des Gerätes,
- Erfolgte Authentifizierung des Gerätes bei dem Gerät, das die Firewall-Funktionalität aufweist,
- Zuvor erfolgter Konfigurationseintrag in der Firewall oder in einem anderen geeigneten Datenspeicher, der bestimmte Geräte zulässt oder ausschließt,
- Funktionsumfang des Gerätes,
- Aktueller Zustand des Teilnetzes ohne Busreset,
- Vorkonfiguriertes Gesamtsystemverhalten bei bestimmten Umgebungsbedingungen, z.B. Zündungsstatus.

5. Verfahren nach einem der Ansprüche 3 bis 5, **dadurch gekennzeichnet, dass** die Firewall (100) nach dem erneuten Busreset zum Zusammenschalten der beiden Teilnetze überprüft, ob sich die Topologie, d.h. die Anzahl und der Typ der angeschlossenen Geräte, insbesondere des Teilnetzes in dem der Busreset zuvor durchgeführt wurde, gegenüber dem zuvor Überprüften geändert hat, um in letzterem Fall den erneuten Busreset auszulösen und die Überprüfung zu wiederholen.

6. Verfahren nach einem der Ansprüche 3 bis 5, **dadurch gekennzeichnet, dass** nach positiver Überprüfung des Zusammenschaltens der Teilnetze die Firewall als Bridge zwischen den Teilnetzen betrieben wird.

7. Verfahren nach einem der Ansprüche 3 bis 7, **dadurch gekennzeichnet, dass** die Firewall (100) in Abhängigkeit der Topologie des Teilnetzes (1000), in dem der Busreset durchgeführt wurde, überprüft, ob einige Geräte dieses Teilnetzes mit dem Teilnetz (2000) zusammengeschaltet werden können, in dem kein Busreset durchgeführt wurde.

8. Netzwerk mit Buscharakter, welche mindestens ein Gerät (400, 100) mit einem ausgewählten Port aufweist, über den weitere Geräte (200, 300) anschließbar sind, wobei die an dem ausgewählten Port anschließbaren weiteren Geräte geeignet sind ein Teilnetz (1000) zu bilden, in welchem ein Busreset wirksam geschaltet werden kann unabhängig von Geräten (400, 500, 600) in einem anderen Teilnetz (2000) und wobei eine Firewall (100) vorgesehen ist, die in der Lage ist, angeschlossene Geräte (200 bis 600) nach bestimmten Kriterien zu prüfen und zu entscheiden, ob nach einem Busreset ein Zusammenschalten des Teilnetzes (1000) mit Busreset mit einem weiteren Teilnetz (2000) möglich ist und bei einer Entscheidung für ein Zusammenschaltung ein erneuter Busreset auslösbar ist, der nicht vom Firewall (100) blockiert wird, wodurch ein Aufbau eines gemeinsamen Netzes bestehend aus den beiden Teilnetzen (1000, 2000) ermöglicht wird.

## Claims

1. Method for operating two bus-like subnetworks having the following steps:
- a bus reset is triggered when at least one further device (300) is put into operation in one of the subnetworks (1000, 2000),
- this bus reset is activated in that subnetwork (1000) in which the further device (200, 300) is located,
- the connected devices (200 to 600) are checked according to specific criteria by a firewall (100),
- on the basis of this checking the firewall (100) decides whether to connect together the two subnetworks (1000, 2000),
- if this decision is to connect them together, a renewed bus reset is triggered, which is not blocked by the firewall (100), as a result of which the establishment of a common network composed of the two subnetworks (1000, 2000) is made possible.

2. Method according to Claim 1, **characterized in that** the subnetworks (1000, 2000) are operated, as a result of a composite network connected together from them, according to the IEEE 1394 Standard.

3. Method according to one of Claims 1 to 2, **characterized in that** in the event of a decision not to connect together the subnetworks (1000, 2000), both subnetworks are operated independently of one another, in particular access to the devices and data of the subnetwork (100) which is assigned to the additional device (200, 300) being prohibited.

4. Method according to one of Claims 1 to 3, **characterized in that** during the checking as to whether the subnetwork (1000) in which the bus reset has been carried out is to be connected together with the subnetwork (2000) which has not experienced a bus reset, at least one of the following criteria is checked:
- manufacturer's identifier (OUI),
- manufacturer-specific identification,
- type of device,
- hardware version of the device,
- software version of the device,
- authentication of the device which has been carried out in the case of the device which has the firewall functionality,
- previously carried out configuration entry in the firewall or in some other suitable data memory which permits or excludes specific devices,
- functional scope of the device,
- current state of the subnetwork without a bus reset,
- preconfigured composite system behaviour under specific ambient conditions, for example ignition status.

5. Method according to one of Claims 3 to 5, **characterized in that** after the renewed bus reset in order to connect together the two subnetworks, the firewall (100) checks whether the topology, i.e. the number and the type of connected devices, in particular of the subnetwork in which the bus reset has previously been carried out, has changed compared to the previously checked one, in order, in the latter case, to trigger the renewed bus reset and repeat the checking.

6. Method according to one of Claims 3 to 5, **characterized in that** after positive checking of the connecting together of the subnetworks the firewall is operated as a bridge between the subnetworks.

7. Method according to one of Claims 3 to 7, **characterized in that** the firewall (100) checks, as a function of the topology of the subnetwork (1000) in which the bus reset has been carried out, whether a number of the devices of this subnetwork can be connected together with the subnetwork (2000) in which a bus reset has not been carried out.

8. Bus-like network, which has at least one device (400, 100) with a selective port via which further devices (200, 300) can be connected, the further devices which can be connected to the selected port being suitable for forming a subnetwork (1000) in which a bus reset can be activated independently of devices (400, 500, 600) in another subnetwork (2000), a firewall (100) being provided which is capable of checking connected devices (200 to 600) according to specific criteria and of deciding whether, after a bus reset, it is possible to connect the subnetwork (100) with a bus reset to a further subnetwork (2000), and when there is a decision to connect it is possible to trigger a renewed bus reset which is not blocked by the firewall (100), which makes it possible to build up a common network composed of the two subnetworks (1000, 2000).

## Revendications

1. Procédé d'opération de deux sous-réseaux ayant des caractéristiques d'un bus, comportant les étapes suivantes :
- on déclenche une remise du bus à l'état initial, lors d'une mise en service d'au moins un autre appareil (300) dans un des sous-réseaux (1000, 2000),
- cette remise du bus à l'état initial est commutée efficacement dans le sous-réseau (1000) dans lequel se trouve l'autre appareil (200, 300),
- ensuite, les appareils connectés (200 à 600) sont vérifiés par un pare-feu (100) selon des critères déterminés,
- sur la base de cette vérification, le pare-feu (100) décide si une interconnexion des deux sous-réseaux (1000, 2000) sera effectuée,
- si cette décision d'interconnexion n'a pas lieu, on déclenche une nouvelle remise du bus à l'état initial non bloquée par le pare-feu (100), pour permettre la formation d'un réseau conjoint constitué des deux sous-réseaux (1000, 2000).

2. Procédé selon la revendication 1,
**caractérisé en ce que**
les sous-réseaux (1000, 2000) sont opérés, de même qu'un réseau total interconnecté à partir de ceux-ci, selon la norme IEEE 1394.

3. Procédé selon l'une des revendications 1 à 2,
**caractérisé en ce que**
si on a pris la décision qu'une interconnexion des sous-réseaux (1000, 2000) ne doit pas avoir lieu, les deux sous-réseaux seront opérés indépendamment l'un de l'autre et, en particulier, on interdit un accès aux appareils et données du sous-réseau auquel l'appareil supplémentaire (200, 300) est associé.

4. Procédé selon l'une des revendications 1 à 3,
**caractérisé en ce que**
pendant la vérification permettant de décider si le sous-réseau (1000) ayant subi la remise du bus à l'état initial, doit être interconnecté avec le sous-réseau (2000) n'ayant pas eu de remise du bus à l'état initial, on vérifie au moins l'un des critères suivants :
- reconnaissance du fabricant (OUI),
- identification spécifique au fabricant,
- type d'appareil,
- classe d'appareil,
- état du matériel de l'appareil,
- état du logiciel de l'appareil,
- authentification effectuée de l'appareil, sur l'appareil qui présente la fonctionnalité pare-feu,
- introduction précédemment effectuée de la configuration dans le pare-feu ou dans un autre support de données approprié, qui permet ou exclut certains appareils,
- étendue du fonctionnement de l'appareil,
- état actuel du sous-réseau sans remise du bus à l'état initial,
- comportement préconfiguré du système total dans certaines conditions ambiantes, par exemple état d'amorçage.

5. Procédé selon l'une des revendications 3 à 5,
**caractérisé en ce qu'**
après la nouvelle remise du bus à l'état initial pour l'interconnexion des deux sous-réseaux, le pare-feu (100), vérifie si la topologie, c'est-à-dire le nombre et le type des appareils connectés, en particulier du sous-réseau ayant subi la remise du bus à l'état initial précédemment, a changé par rapport à celle qui a été vérifiée antérieurement, afin de déclencher à nouveau la remise du bus à l'état initial, dans ce dernier cas, et de répéter la vérification.

6. Procédé selon l'une des revendications 3 à 5,
**caractérisé en ce qu'**
après vérification positive de l'interconnexion des sous-réseaux, le pare-feu fonctionne comme un pont entre les sous-réseaux.

7. Procédé selon l'une des revendications 3 à 7,
**caractérisé en ce que**
le pare-feu (100) vérifie, en fonction de la topologie du sous-réseau (1000) ayant subi la remise du bus à l'état initial, si certains appareils de ce sous-réseau peuvent être interconnectés avec le sous-réseau (2000) n'ayant subi aucune remise du bus à l'état initial.

8. Réseau ayant des caractéristiques d'un bus, qui comporte au moins un appareil (400, 100) avec un port sélectionné pour connecter d'autres appareils (200, 300) pouvant être connectés, à ce port et aptes à former un sous-réseau (1000) dans lequel une remise du bus à l'état initial peut être commutée efficacement, indépendamment des appareils (400, 500, 600) l'autre sous-réseau (2000), et avec un pare-feu (100) en mesure de vérifier les appareils connectés (200 à 600) selon des critères déterminés, et de décider si après une remise du bus à l'état initial, une interconnexion du sous-réseau (1000) avec remise du bus à l'état initial est possible avec un autre sous-réseau (2000), et dans lequel si la décision d'une interconnexion est prise, on déclenche une nouvelle remise du bus à l'état initial, non bloquée par le pare-feu (100), pour permettre la formation d'un réseau conjoint constitué des deux sous-réseaux (1000, 2000).
